# EUROPEAN PATENT APPLICATION

(11) **EP 4 679 040 A1**
(43) Date of publication of application: **14.01.2026**
(21) Application number: 24188419.6
(22) Date of filing: 12.07.2024
(51) Int. Cl.: G01D 5/353

(54) **AN INTERROGATOR SYSTEM AND A METHOD**

(71) Applicant: Nederlandse Organisatie voor toegepast-natuurwetenschappelijk Onderzoek TNO, 2595 DA 's-Gravenhage (NL)
(72) Inventor: Cheng, Lun-Kai, 2595 DA 's-Gravenhage (NL); Xu, Man, 2595 DA 's-Gravenhage (NL); Eschen, Martin, 2595 DA 's-Gravenhage (NL)
(74) Representative: V.O.

(57) **Abstract**

The invention relates to an interrogator system for interrogating fiber based sensors. The system comprises a broadband excitation light source illuminating a first lead fiber section having a wavelength shift response generating optical waveguide sensor, and a second lead fiber section having an in-line two reflectors based fiber interferometer sensor. The system also includes a detection 3 x 3 interferometer having an optical path difference arranged to match the wavelength shift response generating optical waveguide sensor and the in-line two reflectors based fiber interferometer sensor.

## Description

The present invention relates to a interrogator system for interrogating fiber based sensors.

Interrogating systems for interrogating fiber based sensors such as FBGs and in-line two reflectors based fiber interferometric sensors are known e.g. from patent publication WO 2022/066002 A1 in the name of the applicant, e.g. for application in the medical field.

The grating based FBG sensor changes it's spectral properties when subjected to a context to be measured. In general, a transmission and/or reflection spectrum of the sensor changes. By optically interrogating an FBG various physical parameters influencing the grating properties of the FBG can be determined indirectly from the optical behavior of the FBG.

Similarly, in-line two reflectors based fiber interferometric sensors are used for accurately determining a distance change between two optical reflectors. Such sensors are e.g. used in the field of non-destructive ultrasonic testing, such as for example for the detection of delamination, damage, stiffness changes and/or rust in large structures such as bridges, industrial structures or offshore structures. Specifically, a fiber interferometer measurement system can be applied for receiving guided acoustic or elastic waves in non-destructive ultrasonic testing.

FBG and fiber interferometer sensing platforms have different types of optical output, viz. a wavelength shift for FBGs and a fiber length change induced optical delay for fiber interferometers. Therefore, both types of sensing platforms are used separately applying an interrogator that is specifically developed to meet the requirements relating to the specific types of optical output.

It is an object of the invention to simplify the manner of interrogating respective fiber based sensors. It is in particular an object of the invention to provide an interrogator system for interrogating fiber based sensors in a flexible manner.

Thereto, according to an aspect of the invention, an interrogator system for interrogating fiber based sensors is provided, comprising a broadband excitation light source, a first lead fiber section including a wavelength shift response generating optical waveguide sensor, the first lead fiber section being associated with the broadband excitation light source for being illuminated by said broadband excitation light source, a second lead fiber section including an in-line two reflectors based fiber interferometer sensor, the second lead fiber section being associated with the broadband excitation light source for being illuminated by said broadband excitation light source, and a detection 3 x 3 interferometer associated with the first lead fiber section and the second lead fiber section for converting a response signal into an interferometric signal, wherein the detection 3 x 3 interferometer has an optical path difference arranged to match the wavelength shift response generating optical waveguide sensor and the in-line two reflectors based fiber interferometer sensor.

By applying an interrogator that is arranged for illuminating a wavelength shift response generating optical waveguide sensor such as a FBG and/or an in-line two reflectors based fiber interferometer sensor, and by providing a detection 3 x 3 interferometer having an optical path difference that matches both sensor types, both sensor types can appropriately be analyzed in a single system simplifying the interrogation process and offering flexibility e.g. in terms of handling different types of optical waveguide based e.g. fiber optic sensors and data processing. Further, the accuracy of applicability of sensor types can be exploited in an easy manner.

The optical path difference of the detection 3 x 3 interferometer may be stationary or selectable, e.g. using an optical path length modulator. By switching between the selectable optical path differences, both sensor types can be read out in a subsequent manner with optimized performance.

The first fiber section and the second fiber section may be arranged in series or in parallel with respect to each other, or in any other configuration, e.g. including serial or parallel subsections.

As examples, the wavelength shift response generating optical waveguide sensor may be implemented as a FBG, a PS-FBG, a Fabry-Perot interferometer or a fiber ring resonator, or any other optical waveguide sensor generating a wavelength shift response when influenced in a measurement context.

Advantageously, for wavelength shift response generating sensors, the system may include a spectral band filter for filtering light illuminating the first lead fiber section or propagating from the first lead fiber section, wherein a phase range of the interferometric signal of the detection 3 x 3 interferometer is limited to less than 2 π. Then, an absolute wavelength measurement can be obtained. However, in principle, the system may be implemented without spectral band filters, e.g. for performing a relative wavelength change measurement.

On the other hand, a spectral band filter may be used for filtering light illuminating the second fiber section, for coherence length control of the fiber interferometer sensor.

Preferably, the interrogator system comprises a wavelength domain multiplexing unit associated with the broadband excitation light source or the detection 3 x 3 interferometer, as well as a multiple number of wavelength shift response generating optical waveguide sensors and in-line two reflectors based fiber interferometer sensors each operative at a mutually different wavelength domain corresponding to a selectable wavelength domain of the wavelength domain multiplexing unit. Then, a wavelength domain multiplexing scheme is enabled offering the advantage of interrogating multiple sensors individually while, on the other hand, using a single broadband excitation light source and a single detection 3 x 3 interferometer. However, in principle, a single wavelength shift response generating optical waveguide sensor and a single in-line two reflectors based fiber interferometer sensor can be used.

When associating the wavelength domain multiplexing unit with the detection 3 x 3 interferometer, said detection 3 x 3 interferometer can be connected to wavelength domain channels of the wavelength domain multiplexing unit, via an optical switch. Alternatively, the detection 3 x 3 interferometer may be connected to a broadband channel of the wavelength domain multiplexing unit, via an optical circulator, wherein wavelength domain channels of the wavelength domain multiplexing unit are connected to a reflector, via an optical switch for wavelength domain channel selection. Furthermore, the wavelength domain channel can include the spectral band filter functionality.

The interrogator system can be applied in a Time Domain Multiplexing mode, wherein the broadband excitation light source is arranged to operate as a pulsed light source, and wherein the system further comprises delay fiber sections interconnecting the wavelength shift response generating optical waveguide sensors and fiber interferometer sensors to arrange the output of the different sensors arrives the 3x3 detection interferometer at different time moments, respectively.

Advantageously, the system includes delay fiber sections, e.g. included in the first and second lead fiber sections, or interposed between broadband channels of the wavelength domain multiplexing unit and the optical switch described above, thereby enabling a mixed Time Domain Multiplexing and Wavelength Domain Multiplexing mode.

Optionally, the detection 3 x 3 interferometer of the interrogator system is provided with a stabilized reference FBG for calibration of environmental thermal and/or mechanical effects to the detection 3 x 3 interferometer.

The invention also relates to a method of interrogating fiber based sensors.

Other advantageous embodiments according to the invention are described in the following claims.

The invention will be further elucidated on the basis of exemplary embodiments which are represented in the drawings. The exemplary embodiments are given by way of non-limitative illustration of the invention. In the drawings:
Fig. 1 shows a schematic view of an interrogator system according to a first embodiment of the invention;
Fig. 2 shows a schematic view of an interrogator system according to a second embodiment of the invention;
Fig. 3 shows a schematic view of an interrogator system according to a third embodiment of the invention;
Fig. 4 shows a schematic view of an interrogator system according to a fourth embodiment of the invention;
Fig. 5 shows a schematic view of an interrogator system according to a fifth embodiment of the invention;
Fig. 6 shows a schematic view of an interrogator system according to a sixth embodiment of the invention;
Fig. 7 shows a schematic view of an interrogator system according to a seventh embodiment of the invention;
Fig. 8 shows a schematic view of an interrogator system according to an eight embodiment of the invention;
Fig. 9 shows a schematic partial view of a detection 3 x 3 interferometer included in an interrogator system of any of Figs. 1-8, and
Fig. 10 shows a flow chart of a method according to the invention.

In the figures identical or corresponding parts are represented with the same reference numerals. The drawings are only schematic representations of embodiments of the invention, which are given by manner of non-limited examples.

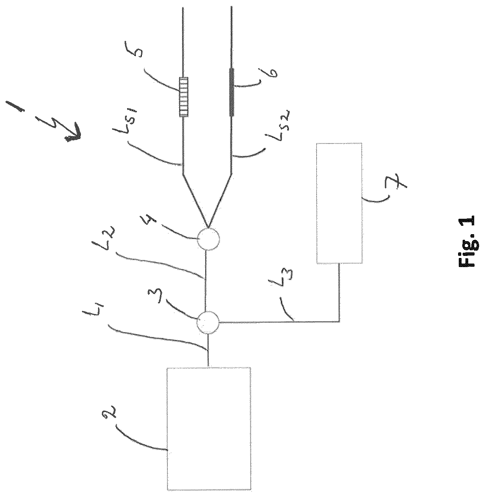

Figure 1 shows a schematic view of an interrogator system 1 according to a first embodiment of the invention. The system 1 includes a broadband excitation light source 2, a first lead fiber section Lₛ₁, a second lead fiber section Lₛ₂ and a detection 3 x 3 interferometer 7. The first lead fiber section Lₛ₁ and the second lead fiber section Lₛ₂ are both associated with the excitation light source 2 for being illuminated by said excitation light source 2. Further, the detection 3 x 3 interferometer 7 is associated with the first lead fiber section Lₛ₁ and the second lead fiber section Lₛ₂ for converting a response signal received from the first lead fiber section Lₛ₁ or the second lead fiber section Lₛ₂ into an interferometric signal, in particular an interferometric phase signal ϕ. The system 1 is arranged to interrogate either the first lead fiber section Lₛ₁ and the second lead fiber section Lₛ₂ by selectively controlling an optical switch 4 described below. Alternatively, both fiber sections L_{s1,2} can be interrogated simultaneously using multiplexing capability as also described below.

The excitation light source 2 is implemented as a broadband type light source, such as an Amplified Spontaneous Emission (ASE) light source or a mode locked laser, with spectral bandwidth covering the reflection / transmission spectrum of the sensors 5, 6 with different center wavelength enabling wavelength domain multiplexing ability.

The first lead fiber section Lₛ₁ includes a wavelength shift response generating optical waveguide sensor 5, such as a FBG, a PS-FBG, a Fabry-Perot interferometer or a fiber ring resonator. Generally, a mechanical deformation of the optical waveguide sensor 5 may cause the sensor 5 to generate an optical response having a wavelength shift.

The second lead fiber section Lₛ₂ includes an in-line two reflectors based fiber interferometer sensor 6. The two reflectors may be implemented as FBGs for example.

In the shown embodiment, the system 1 further includes a first fiber section L₁, a second fiber section L₂ and a third fiber section L₃. The first fiber section L₁ is connected, at a first end thereof, to the light source 2. The second fiber section L₂ is associated, at a first end thereof, to the first and second lead fiber sections L_{s1,2}, respectively, while the third fiber section L₃ is connected, at a first end thereof, to the detection 3 x 3 interferometer 7. Also, the system 1 shown in Fig. 1 includes an optical circulator 3 interconnecting second ends, respectively, of the first, second and third fiber sections L₁₋₃ to each other, as well as an optical switch 4 selectively connecting the first end of the second fiber section L₃ to either the first lead fiber section Lₛ₁ or the second lead fiber section Lₛ₂.

The detection 3 x 3 interferometer 7 can be implemented e.g. as described in more detail in the article entitled "Fiber interferometer combining sub-nm displacement resolution with miniaturized sensor head" published on 23 April 2017 in Proceedings SPIE 10323, 25th International Conference on Optical Fiber Sensors for the detection of a target movement.

Specifically, the detection 3 x 3 interferometer 7 may include A beam splitter, a first interferometer fiber section, a second interferometer fiber section, a 3 x 3 beam combiner with 3 outputs and three optical detectors converting the interferometric signal from optical domain into electrical domain. Here, the beam splitter is connected, at an input side, to the first end of the third fiber section L₃. Further, both the first and second interferometer fiber sections are interconnected between an output side of the beam splitter and an input side of the 3 x 3 beam combiner or coupler, forming parallel paths between the beam splitter and the 3 x 3 beam combiner. The three optical detectors are connected to the 3 x 3 beam combiner, at an output side thereof.

It is noted that the beam splitter, the first and second interferometer fiber sections, and the 3x3 combiner can be implemented, in principle, as other light guiding structures, e.g. optical waveguides.

During operation of the interrogator system 1, the excitation light source 2 generates a light beam travelling through the first fiber section L₁, the optical circulator 3, the second fiber section L₂ and the optical switch 4 selectively illuminating either the first or the second lead fiber section L_{s1;2}. After interaction with the sensor 5;6 in the respective firs tor second lead fiber section L_{s1;2} a light beam travels via the optical switch 4, the second fiber section L₂, the optical circulator 3 and the third fiber section L₃ to the detection 3 x 3 interferometer 7.

The detection 3 x 3 interferometer 3 is dimensioned such that the first and the second interferometer fiber section has a mutual optical path difference OPD.

According to an aspect of the invention, the detection 3 x 3 interferometer 7 has an optical path difference OPD arranged to match the wavelength shift response generating optical waveguide sensor 5 and the in-line two reflectors based fiber interferometer sensor 6. Then, the system 1 is arranged to interrogate both the first lead fiber section Lₛ₁ and the second lead fiber section Lₛ₂. In other words, the system 1 is enabled to measure both the wavelength shift response generating optical waveguide sensor 5 and the in-line two reflectors based fiber interferometer sensor 6 in a single network configuration.

Upon selecting the first lead fiber section Lₛ₁, as shown in Fig. 1, the wavelength shift response generating optical waveguide sensor 5 may be interrogated. Here, a wavelength λ to phase ϕ relation is generated wherein a so-called wavelength to phase scale factor ΔΦ / Δλ is proportional to the optical path difference OPD of the detection 3 x 3 interferometer 7. In particular, the wavelength to phase scale factor ΔΦ / Δλ = OPD . 2 π / λ².

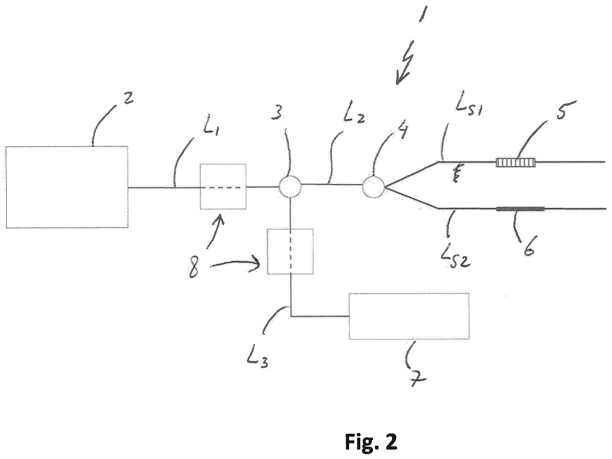

Figure 2 shows a schematic view of an interrogator system 1 according to a second embodiment of the invention that is mainly similar to the first embodiment shown in Fig. 1, however in the second embodiment further including a spectral filter or bandpass filter 8 that is included in the first or third fiber section L_{1,3}.

Here, the second lead fiber section Lₛ₂ is selected such that the in-line two reflectors based fiber interferometer sensor 6 such as a hollow core fiber gas sensor or low finesse fiber in-line fiber interferometer, may be interrogated. An optical path difference OPD in the two beams fiber interferometer causes a phase change Δφ that is proportional to the optical path length change Δ OPD in the fiber interferometer sensor. In particular, the phase change caused by the ΔOPD is Δφ = ΔOPD (sensor interferometer) . 2 π / λ. Further, the interferometric phase signal ΔΦ generated by the detection 3 x 3 interferometer 7 is proportional to OPD (detection interferometer) - ΔOPD (sensor interferometer). In particular, the interferometric phase signal phase ΔΦ is [OPD (detection interferometer)-ΔOPD (sensor interferometer)]. 2 π / λ., where the OPD (detection interferometer) can be subjected to a change ΔOPD (detection interferometer) which results in noise in ΔOPD (sensor interferometer) calculation.

Due to the presence of the bandpass filter 8 a coherence length control of the fiber interferometer sensor 6 is obtained. Upon proper choice of the coherence length of the excited light beam only a single interference light beam remains at the 3 x 3 beam combiner of the detection 3 x 3 interferometer. In particular, the coherence length related to the spectrum of the light reflected by the in-line reflectors of the fiber interferometer sensor 6 may be selected to be shorter than twice or 5 times the optical length between said reflectors to avoid direct interference between the reflection from the two reflectors. From the three optical detectors connected to the 3 x 3 beam combiner the interferometric phase signal ϕ correlated to ΔOPD (sensor interferometer) can be derived.

It is noted that the first embodiment shown in Fig. 1 and the second embodiment shown in Fig. 2 can be integrated into a single system 1 by rendering the operation of the spectral filter 8 selectable, preferably synchronous with the optical switch 4, e.g. such that the spectral filter 8 is active when the in-line two reflectors based fiber interferometer sensor 6 is interrogated.

Using a single interrogator system 1, both the wavelength shift response generating optical waveguide sensor 5 and the in-line two reflectors based fiber interferometer sensor 6 can be interrogated. Here, the detection 3 x 3 interferometer 7 has an optical path difference OPD (detection interferometer) arranged to match the wavelength shift response generating optical waveguide sensor 5 as well as the in-line two reflectors based fiber interferometer sensor 6.

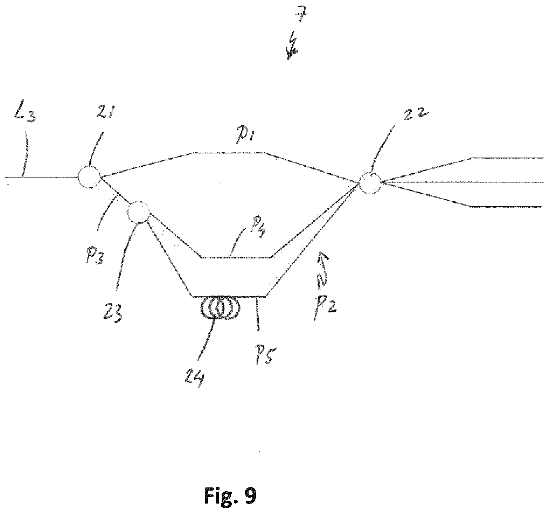

In principle, the optical path difference OPD of the detection 3 x 3 interferometer may be stationary or constant. Otherwise the optical path difference OPD of the detection 3 x 3 interferometer may be selectable, e.g. between an OPD value matching with the wavelength shift response generating optical waveguide sensor 5, and an OPD value matching with the in-line two reflectors based fiber interferometer sensor 6, preferably synchronous with the optical switch 4 such that a proper OPD is applied to a signal propagating from a corresponding sensor 5, 6. To this end, the detection 3 x 3 interferometer 7 may be provided with a path length modulator to optimize the optical phase difference OPD to an optical wavelength change or an optical phase change to be detected, referring to Fig. 9.

The spectral or bandpass filter 8 can also be applied in combination with the first lead fiber section Lₛ₁, i.e. when interrogating the wavelength shift response generating optical waveguide sensor 5 e.g. implemented as a FBG. The bandpass filter 8 can be applied e.g. in the first fiber section L1 or the third fiber section L3. As an example, the bandpass filter 8 can be implemented as a single wavelength output channel of a Wavelength Domain Multiplexing WDM device, e.g. an Arrayed Waveguide Grating AWG with bandwidth Δλ_{BW}. By properly selecting an OPD of the detection 3 x 3 interferometer 7, a phase range ΔΦ of the detection 3 x 3 interferometer 7 may be limited to less than 2 π, in particular for performing an absolute wavelength change measurement, instead of a relative wavelength change measurement. Specifically, for the purpose of limiting the phase range Δϕ to be less than 2 π for the effective operational wavelength range Δλ_{BW} of the sensor 5, the OPD of the detection 3 x 3 interferometer 7 should be equal or smaller than an absolute optical path difference OPD_{abs} = λ_{FBG}² / Δλ_{BW}. As an example, for Δλ_{FBG} being 1 nm, OPD_{abs} can be 2.4 mm, depending on the wavelength λ_{FBG} of the sensor 5. Similarly, for Δλ_{FBG} being 4 nm, OPD_{abs} can be 0.6 mm, depending on the wavelength λ_{FBG} of the sensor 5.

Following the earlier expression for the phase referring to Fig. 1, the phase range Δϕ = OPD (detection interferometer). 2 π / λ². Δλ_{FBG}. When limiting the phase range Δϕ to 2 π, the above expression for the absolute optical path difference OPDabs can be derived. On the other hand, the wavelength can be calculated from the phase ϕ without ambiguity resulting in an absolute wavelength detection within Δλ_{BW} around a central wavelength λ_{CH1} of the AWB channel.

In the shown embodiments, the first lead fiber section Lₛ₁ and the second lead fiber section Lₛ₂ are arranged in parallel with respect to each other. However, in principle, the first and second lead fiber sections L_{s1,2} could also be arranged in series, e.g. when the sensors 5, 6 have a mutually different spectral response behavior or when response signals can be temporally distinguished from each other. More generally, multiplexing techniques can be applied, e.g. wavelength domain multiplexing WDM and/or time domain multiplexing TDM as described in more detail below.

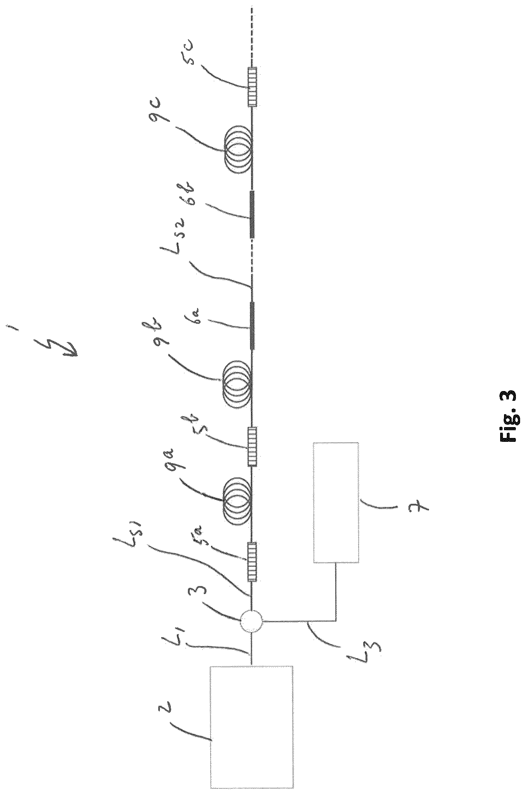

Figure 3 shows a schematic view of an interrogator system 1 according to a third embodiment of the invention. Here, the first lead fiber section Lₛ₁ and the second lead fiber section Lₛ₂ are arranged in series, forming a single integral lead fiber including a multiple number of sensors such as wavelength shift response generating optical waveguide sensors 5a-c and the in-line two reflectors based fiber interferometer sensors 6a-b. Further, the system 1 includes delay fiber sections 9a-c interconnecting the respective wavelength shift response generating optical waveguide sensors 5a-c and the in-line two reflectors based fiber interferometer sensor 6a-b. The broadband excitation light source 2 is arranged to operate as a pulsed light source. Due to the presence of the delay fiber sections 9a-c, respective response signals from the respective sensors 5,6 can be distinguished from each other, at the detection 3 x 3 interferometer, thus implementing a Time Domain Multiplexing TDM scheme wherein subsequent response signals can be analyzed separately without mutual interference. In principle, the sensors may operate at the same or mutually different wavelengths.

By using a Time Domain Multiplexing TDM scheme, the number of sensors to be interrogated can be extended without adding further components to the network.

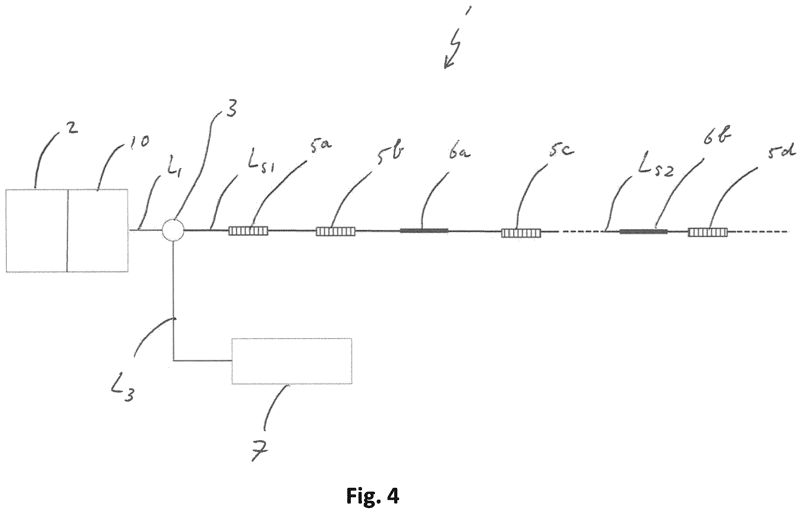

Figure 4 shows a schematic view of an interrogator system 1 according to a fourth embodiment of the invention. Comparing the system 1 to the system of the third embodiment, shown in Fig. 3, the delay fiber sections 9a-c have now been replaced by a wavelength domain multiplexing WDM unit or bandpass multiplexing unit 10, e.g. implemented as an Arrayed Waveguide Grating AWG, associated with the excitation light source 2 operating as a broadband light source. During operation, wavelength domain filtered light source signals pass through the WDM unit 10 for interrogating the sensors 5, 6 on the single integral lead fiber L_{s1;2}. Respective sensors are response to respective wavelength domains, thereby enabling a WDM scheme. Then, the multiple number of wavelength shift response generating optical waveguide sensors 5a-d and the in-line two reflectors based fiber interferometer sensors 6a-b are each operative at a mutually different wavelength domain corresponding to a selectable wavelength domain of the wavelength domain multiplexing unit 10 covered by the spectrum of the broadband light source 2.

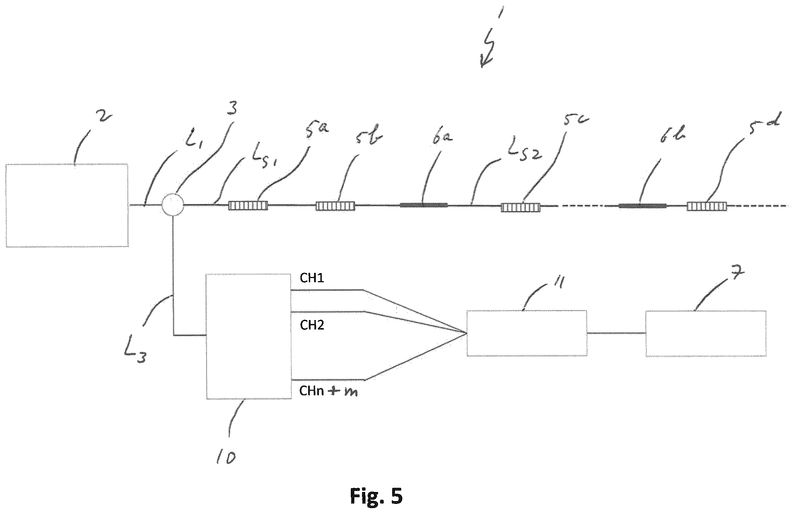

Figure 5 shows a schematic view of an interrogator system 1 according to a fifth embodiment of the invention. Again, a wavelength domain multiplexing WDM unit 10 is applied, however now associated with the detection 3 x 3 interferometer 7. In the shown embodiment, the system 1 has n wavelength shift response generating optical waveguide sensors 5 and m in-line two reflectors based fiber interferometer sensors 6. Further, the system comprises a second optical switch 11 for connecting wavelength domain channels CH1, CH2, ..., CHn+m of the WDM unit 10 to the detection 3 x 3 interferometer 7. Then, response signals from the sensors 5, 6 at mutually different wavelength domains propagating from the respective sensors 5, 6 can pass, subsequent to each other, through the second optical switch 11, for being read out by the detection 3 x 3 interferometer 7.

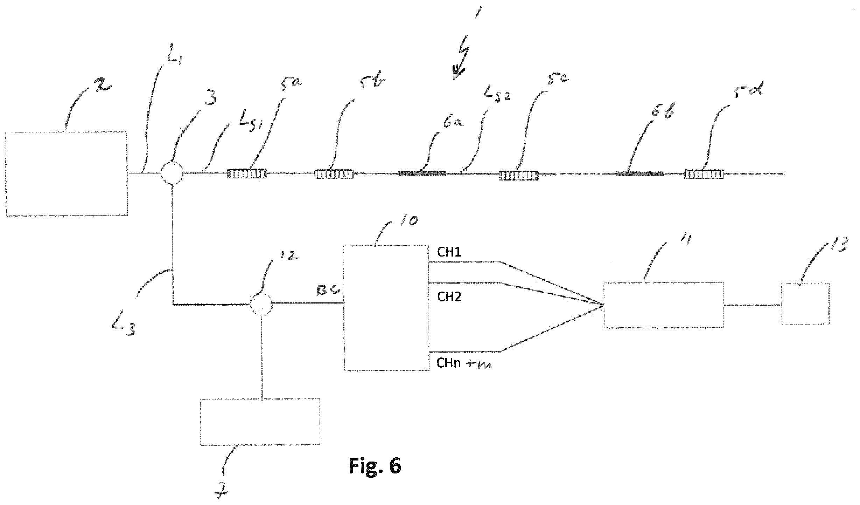

Figure 6 shows a schematic view of an interrogator system 1 according to a sixth embodiment of the invention, forming an alternative to the fifth embodiment shown in Fig. 5. In the sixth embodiment, the system 1 further includes a second optical circulator 12, integrated with the third fiber section L₃, and connected to the detection 3 x 3 interferometer 7, such that light propagates from the integral lead fiber L_{s1;2}, via the second optical circulator 12, to a broadband channel BC of the WDM unit 10, and that light propagating from said broadband channel BC of the WDM unit 10 are directed to the detection 3 x 3 interferometer 7. The system 1 also includes a reflector 13 connected to the second optical switch 11. During operation, light passes, in a subsequent order, via the respective wavelength domain channels CH1, CH2, ..., CHn+m of the WDM unit 10 and the second optical switch 11, is reflected by the reflector 13, propagates back through the second optical switch 11 and the WDM unit 10, via the second optical circulator 12, to the detection 3 x 3 interferometer 7, for being read out.

Time Domain Multiplexing TDM and Wavelength Domain Multiplexing WDM can be combined using an interrogator system according to the invention.

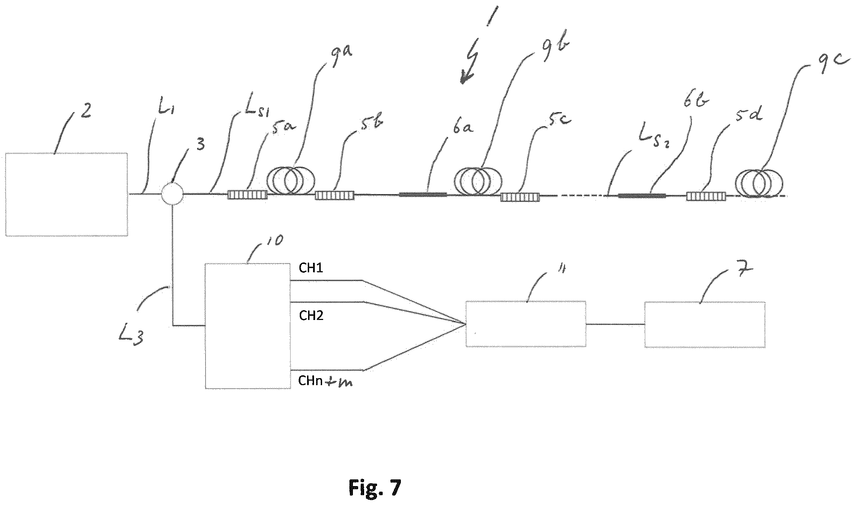

Figure 7 shows a schematic view of an interrogator system 1 according to a seventh embodiment of the invention. Here, the delay fiber sections 9a-c included in the third embodiment, shown in Fig. 3, are combined in the system structure of the fifth embodiment of the invention. By operating the broadband excitation light source 2 as a pulsed light source, response signals can be separated based on their time of arrival even if they operate at the same wavelength domain, while, on the other hand, response signals arriving in the same time window can further be separated based on their wavelength domain specific responsivity. As such, the interrogatory system 1 enables a combined TDM and WDM scheme.

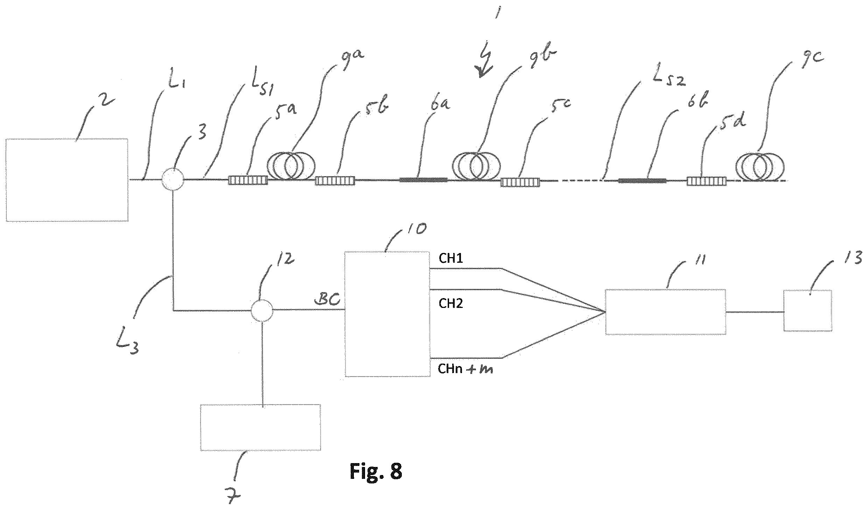

Figure 8 shows a schematic view of an interrogator system 1 according to an eight embodiment of the invention. The system 1 is similar to the system described referring to the seventh embodiment of the invention, shown in Fig. 7, provided that the detection part is now based on the corresponding detection part described referring to the sixth embodiment of the invention, shown in Fig. 6, including the second circulator 12, the detection 3 x 3 interferometer, the WDM unit 10, the second optical switch 11 and the reflector 13. Also, the interrogatory system 1 enables a combined TDM and WDM scheme.

It is noted that, alternatively, the delay sections 9a-c in the seventh and eight embodiments, shown in Figs. 7 and 8, can be moved to a location interposed between the broadband channels CH1, CH2, ..., CHn+m of the WDM unit 10 on the one hand, and the second optical switch 11 on the other hand. Since the light of the sensors including different wavelength domains will arrive at the optical switch 11 at different time moments, the optical switch 11 can also be arranged to pass multiple wavelength domains to reflector 13.

Further, the detection 3 x 3 interferometer 7 can be provided with a stabilized reference FBG for calibration of environmental thermal and/or mechanical effects to the detection 3 x 3 interferometer 7, thereby stabilizing the OPD of the interferometer 7, especially to correct any drift of the OPD.

Figure 9 shows a schematic partial view of a detection 3 x 3 interferometer 7 included in an interrogator system 1 of any of Figs. 1-8. The interferometer 7 includes a splitter 21 connected, at one side, to the third fiber section L3. The interferometer 7 further includes a first optical path P1 having a first path length A and another optical path structure P2, both interconnecting, in parallel, the splitter 21 and a 3 x 3 combiner 22. The optical path structure P2 includes a third optical path P3 interconnecting the splitter 21 to an optical switch 23. Further, the optical path structure P2 includes a fourth optical path P4 and a fifth optical path P5 both interconnecting, in parallel, the optical switch 23 and the 3 x 3 combiner 22. The fifth optical path P5 includes an optical extension element 24. The third optical path P3 and the fourth optical path P4 arranged in concatenation have a second path length B, while the third optical path P3 and the fifth optical path P5, arranged in concatenation have a third path length C.

By operating the optical switch 23 of the interferometer 7, a first pair of optical paths P1 and P3/P4 can be realized resulting in a first detection interferometer OPD 1 defined by the difference between the optical path lengths A and B, as well as a second pair of optical paths P1 and P3/P5 resulting in a second OPD 2 defined by the difference between the optical path lengths A and C. In a specific situation, the first OPD 1 could be applied to match with a wavelength shift response generating optical waveguide sensor 5, while the second OPD 2 could be applied to match with an in-line two reflectors based fiber interferometer sensor 6. As such, the structure between the splitter 21 and the 3 x 3 combiner 22 form a path length modulator to enable optimization of the optical phase difference OPD to an optical wavelength change or an optical phase change to be detected.

The detection interferometer shown on Fig. 9 is of the Mach-Zehnder type. Same functionality to split light and recombine them with a 3x3 combiner can also be realized using a Michelson type of interferometer.

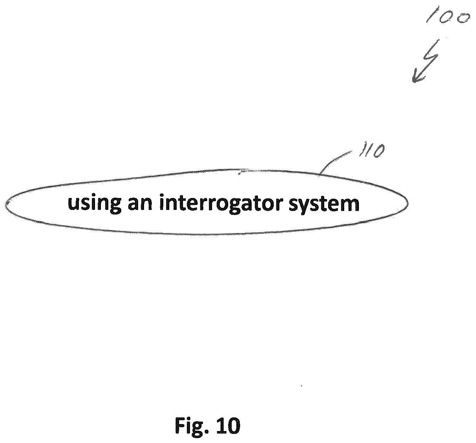

Figure 10 shows a flow chart of a method 100 according to the invention. The method 100 is used for interrogating fiber based sensors. The method 100 comprises a step of using 110 an interrogator system as described above.

The above described fiber interferometer measurement system can advantageously be used in non-destructive ultrasonic testing, such as for example for the detection of any delamination, damage, stiffness changes and/or rust in large structures such as bridges, industrial structures or offshore structures. Specifically, the fiber interferometer measurement system can advantageously be applied for receiving guided acoustic or elastic waves in non-destructive ultrasonic testing.

It is noted that, in principle, the above described fiber interferometer measurement system can also be in other fields, e.g. in geophysical or marine exploration, or in the medical field, or in monitoring system for process industry e.g. for temperature distribution sensing using the absolute FBG wavelength measurement.

Various variations are possible. It will be clear to the skilled person that the invention is not limited to the exemplary embodiment represented here. Many variations are possible.

In this respect it is noted that the idea of applying a bandpass filter for filtering light illuminating the first lead fiber section or light propagating from the first lead fiber section, interrogating the wavelength shift response generating optical waveguide sensor e.g. implemented as a FBG, wherein a phase range of the interferometric signal of the detection 3 x 3 interferometer is limited to less than 2 π, in particular for performing an absolute wavelength change measurement can not only be used in combination with an interrogation system according to claim 1, but also, more generally, to an interrogation system, comprising an excitation light source, such as a broadband excitation light source, a lead fiber section including a wavelength shift response generating optical waveguide sensor, the lead fiber section being associated with the excitation light source for being illuminated by said excitation light source, and a detection 3 x 3 interferometer associated with the lead fiber section for converting a response signal into an interferometric signal, wherein the detection 3 x 3 interferometer has an optical path difference arranged to match the wavelength shift response generating optical waveguide sensor.

Such variants will be apparent for the person skilled in the art and are considered to fall within the scope of the invention as defined in the following claims.

## Claims

1. An interrogator system for interrogating fiber based sensors, comprising
- a broadband excitation light source;
- a first lead fiber section including a wavelength shift response generating optical waveguide sensor, the first lead fiber section being associated with the broadband excitation light source for being illuminated by said broadband excitation light source,
- a second lead fiber section including an in-line two reflectors based fiber interferometer sensor, the second lead fiber section being associated with the broadband excitation light source for being illuminated by said broadband excitation light source, and
- a detection 3 x 3 interferometer associated with the first lead fiber section and the second lead fiber section for converting a response signal into an interferometric signal,
wherein the detection 3 x 3 interferometer has an optical path difference arranged to match the wavelength shift response generating optical waveguide sensor and the in-line two reflectors based fiber interferometer sensor.

2. An interrogator system according to claim 1, wherein the optical path difference of the detection 3 x 3 interferometer is stationary.

3. An interrogator system according to claim 1, wherein the optical path difference of the detection 3 x 3 interferometer is selectable.

4. An interrogator system according to any of the preceding claims, wherein the first fiber section and the second fiber section are arranged in series or in parallel with respect to each other.

5. An interrogator system according to any of the preceding claims, wherein the wavelength shift response generating optical waveguide sensor is a FBG, a PS-FBG, a Fabry-Perot interferometer or a fiber ring resonator.

6. An interrogator system according to any of the preceding claims, further comprising a spectral band filter for filtering the wavelength range of the light illuminating the first lead fiber section or propagating from the first lead fiber section, wherein a phase range of the interferometric signal of the detection 3 x 3 interferometer is limited to less than 2 π, in particular for performing an absolute wavelength measurement of the wavelength shift response generating optical waveguide sensor.

7. An interrogator system according to any of the preceding claims, further comprising a bandpass filter for filtering light illuminating the second fiber section, for coherence length control of the fiber interferometer sensor.

8. An interrogator system according to any of the preceding claims, further comprising a wavelength domain multiplexing unit associated with the broadband excitation light source or the detection 3 x 3 interferometer, also further comprising a multiple number of wavelength shift response generating optical waveguide sensors and in-line two reflectors based fiber interferometer sensors each operative at a mutually different wavelength domain corresponding to a selectable wavelength domain of the wavelength domain multiplexing unit.

9. An interrogator system according to claim 8, wherein the detection 3 x 3 interferometer is connected to wavelength domain channels of the wavelength domain multiplexing unit, via an optical switch.

10. An interrogator system according to claim 8, wherein the detection 3 x 3 interferometer is connected to a broadband channel of the wavelength domain multiplexing unit, via an optical circulator, and wherein wavelength domain channels of the wavelength domain multiplexing unit are connected to a reflector, via an optical switch.

11. An interrogator system according to any of the preceding claims 1-7, wherein the broadband excitation light source is arranged to operate as a pulsed light source, the system further comprising delay fiber sections interconnecting the wavelength shift response generating optical waveguide sensors and fiber interferometer sensors.

12. An interrogator system according to any of the preceding claims 1-7, wherein the broadband excitation light source is arranged to operate as a pulsed light source, the system further comprising delay fiber sections interposed between broadband channels of the wavelength domain multiplexing unit and the optical switch according to claim 9 or 10.

13. An interrogator system according to any of the preceding claims, wherein the detection 3 x 3 interferometer is provided with a stabilized reference FBG for calibration of environmental thermal and/or mechanical effects to the detection 3 x 3 interferometer.

14. A method of interrogating fiber based sensors using an interrogator system according to any of the preceding claims 1-13.
